Europäisches Patentamt

European Patent Office

Office européen des brevets

(11) Publication number: **0 157 539 B1**

## EUROPEAN PATENT SPECIFICATION

(45) Date of publication of patent specification: **09.06.93**  (51) Int. Cl.⁵: **G06F  15/40**

(21) Application number: **85301920.6**

(22) Date of filing: **19.03.85**

(54) Electronic document filing system.

(30) Priority: **31.03.84 JP 63757/84**

(43) Date of publication of application:
**09.10.85 Bulletin  85/41**

(45) Publication of the grant of the patent:
**09.06.93 Bulletin  93/23**

(84) Designated Contracting States:
**DE FR GB**

(56) References cited:

**PATENT ABSTRACTS OF JAPAN, vol.7, no.
180 (P-215)[1325], 9th August 1983; & JP-A-58
84 365 (TOKYO SHIBAURA DENKI K.K.)
20-05-1983**

**ACM TRANSACTIONS ON DATABASE SYS-
TEMS, vol. 8, no. 3, September 1983, pages
410-433, ACM; T. ITO et al.: "Hierarchical file
organization and its application to similar-
string matching"**

**PHILIPS TECHNICAL REVIEW, vol. 39, no. 12,
1980, pages 329-343; J.A. DE VOS: "Megadoc,
a modular system for electronic document
handling"**

(73) Proprietor: **KABUSHIKI KAISHA TOSHIBA
72, Horikawa-cho Saiwai-ku
Kawasaki-shi Kanagawa-ken 210(JP)**

(72) Inventor: **Izawa, Koji c/o Patent Division
KABUSHIKI KAISHA TOSHIBA 1-1 Shibaura
1-chome
Minato-ku Tokyo 105(JP)**

(74) Representative: **Freed, Arthur Woolf et al
MARKS & CLERK 57-60 Lincoln's Inn Fields
London WC2A 3LS (GB)**

## Description

The present invention relates generally to a document filing system and, more particularly, to an apparatus and a method for indexing/filing document information and editing it to facilitate the administration of document information.

A computerized system for electrically indexing and filing various kinds of document information and automatically retrieving desired document information has become increasingly significant in effectively storing, in a small space, large numbers of documents handled on a daily basis. One such system is disclosed in Philips Technical Review, vol. 39, No. 12, 1980, pages 329-343. According to a conventional document filing system of such a type, in order to obtain a desired document from filing documents (e.g., publications, technical issues or the like) indexed and stored in a large-capacity memory such as an optical disk in a predetermined data file structure, character index data corresponding to the desired document is entered by the operator at the keyboard, so that the system can automatically search and retrieve the desired document on the basis of the character index data. The conventional document filing system of the type has an advantage in that it comprises a large scale fixed information system created in such a manner as to allow many users to utilize information, which is freely available to the public.

According to the conventional system, however, a specific hierarchical structure for document filing must be suitably defined for document filing. It is naturally difficult for office workers to suitably set the hierarchical structure which satisfies various needs with respect to effective filing/retrieving operation of document information. It is more difficult for the office workers to change the substantive concept of the document-filing hierarchical structure once defined to create a new document-filing hierarchical structure.

We acknowledge the disclosure in JP-A-5884365 (Patent Abstracts of Japan, vol. 7, No. 180 ((p.215)[1325] 9.8.1983) of an electronic document filing system in which image information may be selected from storage, displayed temporarily, reorganised and stored again as a reassorted file. The temporary display consists of sets of assorted images represented as stacks of plural sheets, e.g. three stacks at separate locations; the documents in a stack are mutually associated. This system employs the conventional hierarchical filing structure referred to above.

It is an object of the present invention to provide a new and improved electronic document filing system which can easily index and file various kinds of document information in accordance with various hierarchical structures.

It is another object of the present invention to provide a new and improved electronic document filing system which can easily index and file various kinds of document information in accordance with various hierarchical structures, thereby helping the office worker or operator to achieve rapid and up-to-date document information retrieval without limiting the office worker or operator to conventional indexing/filing concepts.

The invention provides electronic document filing apparatus according to claim 1, and a document filing method according to claim 7.

According to the electronic document filing system of the present invention, document information obtained by optically scanning paper documents is directly displayed on a display screen at a display terminal. Index data or the like is not, in principle, used to index and file the document information. The operator views the displayed information as though actual paper documents were on his desk. In this case, the display terminal display area may be considered to correspond to the surface of the desk.

Document images closely associated with each other are displayed close to each other on the display screen. In other words, the operator can visually identify a document resembling a given document with respect to a given item and a document similar to the given document with respect to another item in accordance with a layout of document images on the display screen.

In a system for filing document information, the operator can assume the documents to be on his desk in that similar documents are displayed close to each other and dissimilar documents are located at a distance from each other. In this case, a specific filing administration hierarchy need not be established before filing is performed, so that the operator can freely assess the significance of document information. By so filing, it is to be expected that the operator can establish or discover a new relationship between the contents of document information. High-speed filing is performed in a manner described above under the control of a computer, and filing efficiency can be much improved as compared with the case wherein the office worker physically indexes and files document papers at his desk.

The present invention is best understood by reference to the accompanying drawings, in which:

Fig. 1 is a block diagram showing the overall configuration of an electronic document filing system according to a preferred embodiment of the present invention;

Fig. 2 is a representation showing a display screen of a layout display terminal included in the electronic document filing system;

Fig. 3 is a plan view showing various keys arranged in a keyboard included in the electronic document filing system;

Figs. 4A and 4B are, respectively, representations of states of the layout display when a new document is registered in the electronic document filing system;

Fig. 5 is a representation showing the relationship between a display window and a document filing space when an area of a screen of the layout display is translated, enlarged or reduced;

Fig. 6 is a representation for explaining coordinate calculation when the display window is partially extracted from the document filing space given in the layout display terminal;

Fig. 7 is a block diagram of an electrical circuit for performing necessary calculations for coordinate conversion in a hardware manner;

Figs. 8A and 8B are, respectively, representations of the display screen when a registration position (display position) of the document information filed in the document filing structure in the filing system is changed;

Figs. 9A and 9B are, respectively, representations of the display screen when a partial registration area including the registered document information is moved to another position in the document filing structure of the filing system;

Fig. 10 is a flow chart showing a basic control operation routine of a system controller unit arranged in the electronic document filing system; and

Figs. 11A to 11C are, respectively, flow charts for explaining the control operation of the system controller unit.

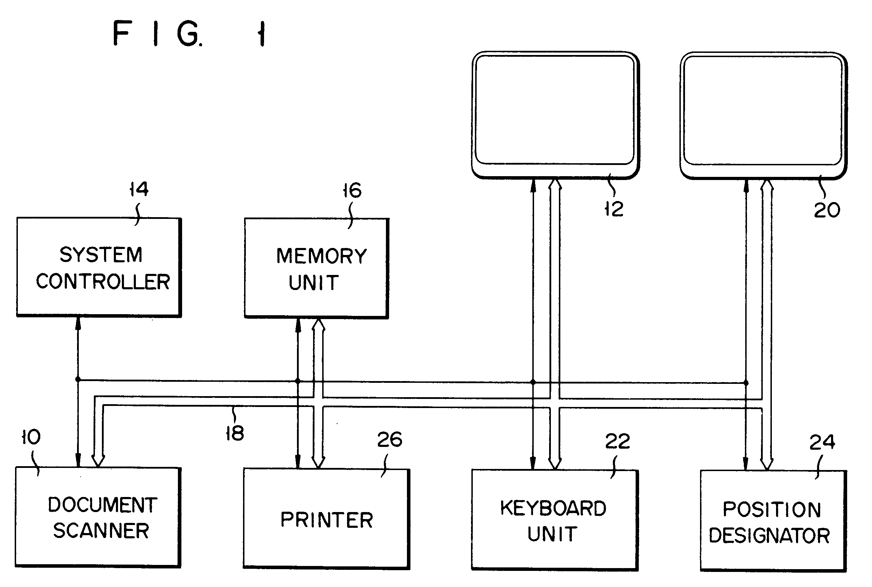

Referring now to Fig. 1, there is illustrated an electronic document filing apparatus serving as a filing tool for indexing and filing document information in accordance with free concepts of individual operators according to a first embodiment of the present invention. This apparatus can be effectively used especially in the following case. A worker or operator can freely group various kinds of document information without being confined to a conventional filing structure, and perform creative information processing so that a surprising relationship is established between unexpected document information for an unexpected item.

As shown in Fig. 1, a document scanner 10 optically scans document paper and generates corresponding document image data. The image data generated by the document scanner 10 is displayed at a first display terminal (document display terminal) 12 and is supplied to a large-capacity memory unit 16 under the control of a system controller 14 including a microprocessor and the like. The memory unit 16 is preferably comprised of a memory device, such as a magnetic disk drive unit, which has a large data storage capacity and which is subjected to repeated data access, i.e., repeated storage/delete. The image data from the scanner 10 is supplied to the memory unit 16 through a data bus 18.

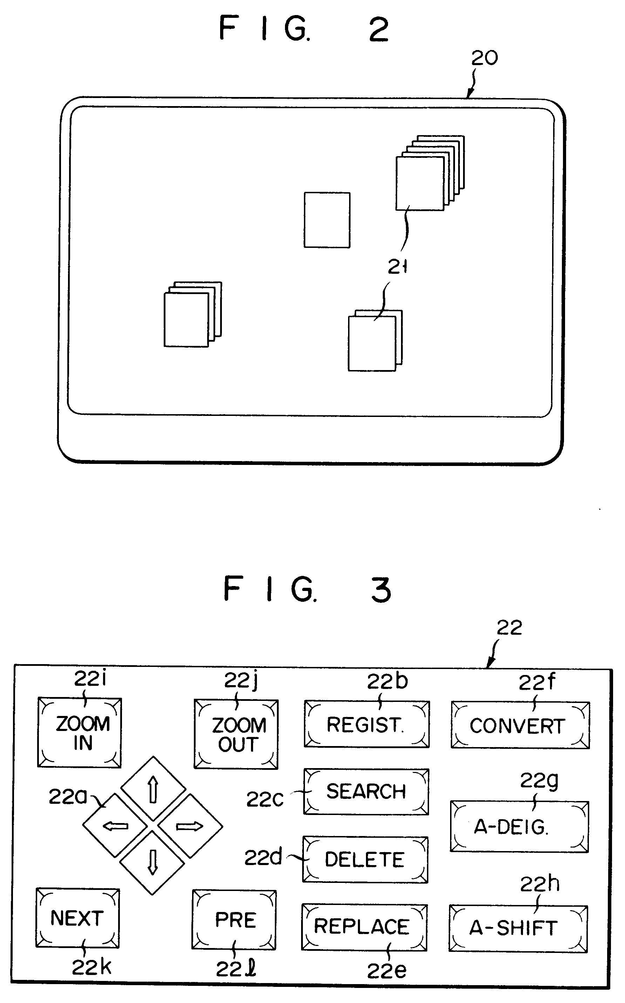

A second display terminal (document layout display terminal) 20 is arranged to display a model of document paper sheets disposed in accordance with a relationship between the contents of document data stored in the memory unit 16. The document layout display terminal 20 displays, as shown in Fig. 2, image components 21 for pictorially representing the document paper sheets in a document filing space. The document paper sheets determined to have a close relationship by the worker are displayed in a group.

A position designator 24 is arranged to designate a display position of the document on the display screen of the display terminal 20, i.e., to designate a desired registration coordinate point in the document layout space. In this embodiment, the position designator 24 contains a touch panel directly mounted on the screen of the document layout display terminal 20.

A keyboard unit 22 shown in Fig. 1 has different function keys in addition to alphanumeric keys. For example, as shown in Fig. 3, the keyboard unit 22 has scroll direction keys 22a, a document registration key (REGIST) 22b, a search key (SEARCH) 22c, a deletion key (DELETE) 22d, a replace key (REPLACE) 22e, a structure conversion key (CONVERT) 22f, an area designation key (A-DESIG) 22g, an area shift key (A-SHIFT) 22h, a zoom-up key (ZOOM IN) 22i, a zoom-down key (ZOOM OUT) 22j, a next page key (NEXT) 22k, a previous page key (PRE) 22ℓ, and so on.

When the document registration key 22b in the keyboard unit 22 is operated, the system controller 14 stores document information read through the scanner 10 in the memory unit 16. At the same time, the input document information is displayed at the display terminals 12 and 20 under the control of the system controller 14. A printer 26 is arranged to create a hard copy of a certain document or documents designated by using the position designator 24.

Content (document image data) of the newly registered document is stored in the memory unit 16 in the following manner. The document image data supplied from the scanner is assigned with a layout management table consisting of: layout coordinate data representing a coordinate point specified by the operator on the display screen (i.e., document filing space at the display terminal 20); time data representing time at which the document is registered; and an identification code identifying the document. These data are sorted in the layout management table in an order of small item numbers and are set for every document registration. It should be noted that the document filing space of the display terminal 20 is a two-dimensional space in this embodiment so as to allow easy understanding of the core concept of the present invention. The layout coordinate data is represented by two-dimensional coordinate data (x,y). When layout coordinate data (x,y) is designated, any corresponding document can be selected from the document filing space at the display terminal 20.

A management table containing address data of the document information in the memory unit 16 can be created by the controller 14. The address data are sorted in the management table in an order of small address numbers. The read/write operation (data access) is performed with respect to the memory unit 16 in accordance with the management table. The system controller 14 searches for and retrieves desired document information in accordance with the layout coordinate data (arbitrarily set by the operator) representing a display position of the document image on the document layout display terminal 20 and the address data (set in a software manner irrespective of the intention of the operator) representing a storage location of the data in the memory unit 16. The retrieved document information is displayed on the document display terminal 12 and is printed as a hard copy by the printer 26 if the operator wishes.

When a quantity of document information is stored in the memory unit 16 in the manner described and new document information is registered in the memory unit 16, the new document information is regularly sorted in accordance with a sorting method. In other words, data sorting in the layout management table and the memory management table is repeated every time new document information is registered and the management table is updated due to movement of the registration position of registered document information.

The basic operation mode of the document filing apparatus in this embodiment will be described in detail hereinafter.

For example, effective and functional indexing and filing of various kinds of product related documents such as product planning reports, drawings, meeting reports, parts catalogs, test reports, marketing research reports, technical references and patent references in a new product development department provides impetus for additional opportunities to create new product development ideas. Therefore, the importance of document filing in new product development should not by any means be downgraded.

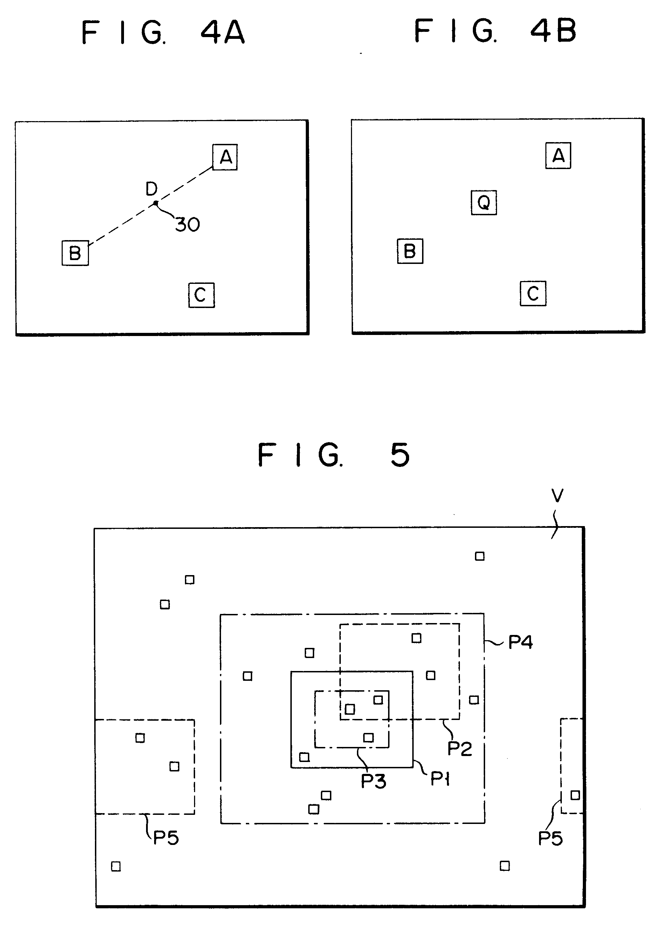

Assume that three documents are already registered, and that document images A, B and C corresponding to these documents are displayed on the screen at the display terminal 20, as illustrated in Fig. 4A. More particularly, assume that these documents are technical documents: document A is concerned with a microfilm; document B, with an optical disk; and document C, with a magnetic tape. When a fourth document Q is newly registered, it is set in the scanner 10 shown in Fig. 1. In this case, the operator designates a recording position of the document Q at the display terminal 20 by using the position designator 24 mounted on the screen of the display terminal 20. For example, when the document Q is concerned with a document for storing an image of the microfilm in an optical disk, the document Q is then concerned with both the microfilm and the optical disk. Therefore, it can be said that the document Q is relevant in its technical concept to both the document A and the document B. In such a case, the operator takes into account a correlation between contents of the document in order to record document Q at a position included in a line connecting documents A and B. The operator designates a point 30 in Fig. 4A. When the registration key 22b in the keyboard 22 is operated, the information of the document Q is read as image information by the scanner 10 in the filing apparatus under the control of the system controller 14. The document image data from the scanner 10 is stored in the memory unit 16 and is displayed at the document layout display terminal 20 as shown in Fig. 4B.

In this case, the image information of the document Q which is read by the document scanner 10 is assigned by the system controller 14 with an identification code (ID code) inherent to the document Q. Display-coordinate data representing the recording layout position of document Q and data representing the current time are automatically added to the identification code. The image information of the document Q is then inserted in the layout management table after data sorting is performed. The actual storage address in the memory unit 16 is inserted in the management table together with the identification code in one-to-one correspondence.

When the new document Q represents the same field as that of any one of the documents A, B and C, the operator designates the same display position as the corresponding document at the document layout display terminal 20. When the operator judges that the content of the new document Q is closely associated with one of the documents A and B, a point closer to the document image closely associated with the content of the new document Q is designated on the line connecting the documents A and B. As a result, degree of correlation between a plurality of documents is evaluated in an analog manner, thereby directly reflecting the evaluation in the document filing system. In addition, the filing space extends two-dimensionally on the display screen, so that correlation between documents can be accurately realized in the filing space displayed on the display screen without being restricted as in a routine filing system. In this manner, analog filing operations can be performed under the control of the system controller 14.

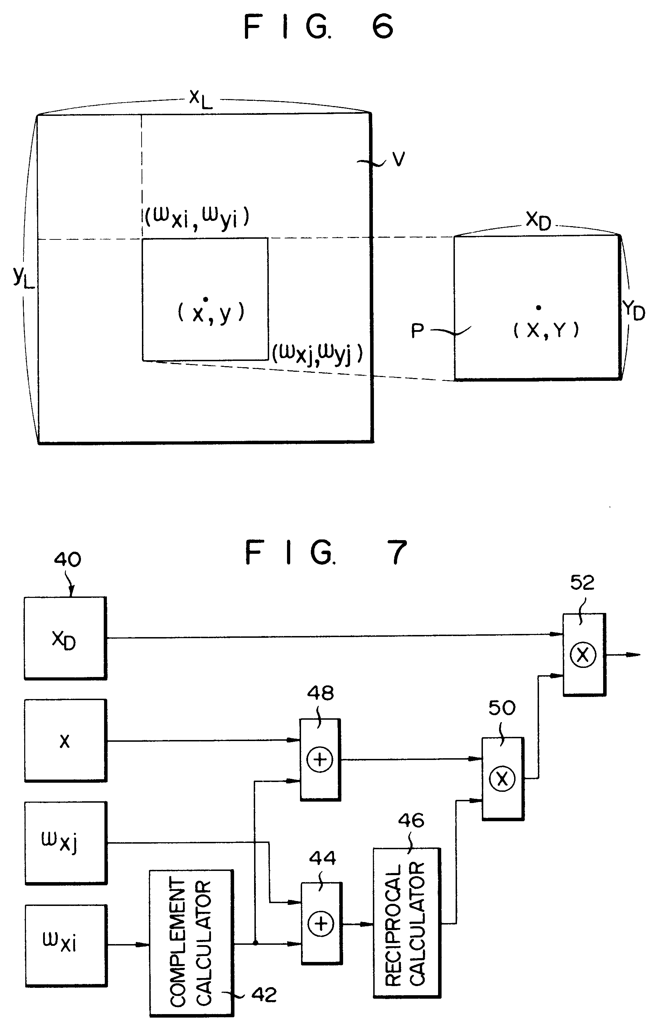

A total space V at the display terminal 20 is defined as an analog registerable address space, as shown in Fig. 5. In other words, the space V may be considered to correspond to a surface of a desk used to determine relative position relationships among document paper sheets in accordance with their technical contents. By this definition, the concept of the space V can be further clarified. Referring to Fig. 5, an area of the display screen or frame is represented by P with respect to the document registration space V. The display screen P can be scrolled in any direction including vertical and horizontal directions with respect to the document registration space V (e.g., the screen P is scrolled from P1 to P2). A relative area of the display screen P with respect to the document registration space V can continuously vary (e.g., P1, P3, P4). A continuous change in the display screen P indicates that the document registration space V can be zoomed in/out on the display screen. This variable display format is obtained by accessing data from the memory unit 16 under the control of the system controller 14.

When the initial screen at the display terminal 20 is given as screen P1, four document images are displayed. The document contents (actual paper images) of the respective documents which are optically read by the scanner 10 are directly displayed at the registration positions of the respective document images on the display screen. This is because the respective document images are large enough to enable the operator to readily read characters on the documents. As previously explained, the positional relationship between the document images is determined in accordance with the correlation of their contents. In a document filing structure which is expanded by defining the relative positional relationship between documents, when the operator wishes to visually observe the next portion of the partial filing structure displayed on the display screen P1, he uses the keyboard 22 to scroll the display screen from P1 to P2, for example, while the display magnification is kept unchanged.

When the operator wishes to visually observe the peripheral document filing structures of the document images currently displayed on the screen, the display magnification is decreased to widen an area for displaying the document filing structure. A change from the display frame P1 to the display frame P4 is the case. Since the display screen physically has a predetermined size, one document image on the display screen becomes relatively small by enlargement (expansion) of the display area of the document filing structure. In this state, when any document image is searched upon operation of the keyboard 22, the system controller 14 causes the display terminal 12 to display the searched document image. In a zoom-out mode (scale-down mode) wherein the display area in the document filing structure is widened from P1 to P4, the system controller 14 checks the storage address in the memory unit 16 by using the document management table, reads out the desired document image data in accordance with the address data, and causes the display terminal 12 to display the readout document image at a size corresponding to the scale of the display area.

The zoom-in or zoom-out operation (scale-up or scale-down) operation of the display frame P with respect to the document registration space or document filing structure space V is performed by using a cursor displayed on the display screen. When the size of the space V of the document filing structure is defined by xL and yL, as shown in Fig. 6, the display frame P is extracted as a window. This window space is defined by a start point address (wxi, wyi) and an end point address (wxj, wyj) in the document registration space V while the operator moves the cursor on the display screen. A position of the image included in the frame or window space P is defined by a coordinate point (x, y). These x- and y-coordinates are the same as the layout x- and y-coordinates.

Assume that the actual display area of the display terminal 20 is defined as (XD, YD), and that the display position is represented by (X, Y). Under these assumptions, the display position is given as a function of the window space P and the actual display screen space as follows:

$$X = \frac{x - \omega xi}{\omega xj - \omega xi} \times XD$$

$$Y = \frac{y - \omega yi}{\omega yj - \omega yi} \times YD$$

where

$\omega xi \leqq x \leqq \omega yj$
$\omega yi \leqq y \leqq \omega yj$

When coordinate conversion is performed in accordance with the above equations, a window space P having any size can be displayed on the actual display screen having a display space D. This operation can be easily realized in a software manner under the control of the system controller 14. However, a special electrical circuit, i.e., hardware is used to perform high-speed coordinate conversion in this embodiment. This is because a shift of the document filing structure space P or zooming on the display screen is smoothly performed by high-speed coordinate conversion.

Fig. 7 shows a coordinate conversion circuit in the system controller 14. Only an x-coordinate conversion circuit is illustrated in Fig. 7. A y-coordinate conversion circuit has a similar arrangement as the x-coordinate conversion circuit. A horizontal length XD of the display screen, an x-coordinate arbitrarily plotted in the document filing structure space P, and coordinate values designated by the cursor are temporarily stored in data RAMs 40, respectively. A value obtained by subtracting an end x-coordinate from a start x-coordinate in the window space in the document filing structure space P is calculated by a complement calculator 42 for calculating a complementary number of the x-coordinate wxi and adding "1" to the complementary number, and an adder 44. Output data from the adder 44 is supplied to a reciprocal calculator 46. Any x-coordinate in the space P is subtracted by the complement calculator 42 and an adder 48 from the x-coordinate of the start point in the window space. Output data from the reciprocal calculator 46 and the adder 48 are multiplied by a multiplier circuit 52. As a result, the x-coordinate X of the actual display position on the display screen can be calculated.

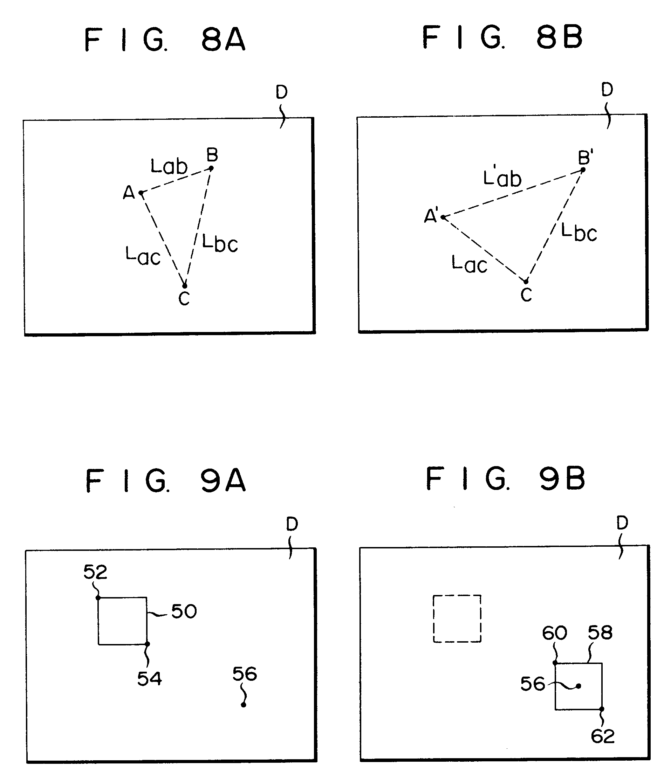

When the operator wishes to change the registration position of the document information registered in the document filing structure, the structure conversion key 22f in the keyboard 22 in Fig. 3 is operated. Assume that three documents on the display screen D are registered to constitute a triangle, as shown in Fig. 8A. When a new document associated with the documents A and B is to be registered, a distance Lab between the documents A and B on the current display screen is short. In order to increase the distance Lab, the registration positions of the documents A and/or B must be updated. The structure conversion key 22f is operated, and a command for increasing the display distance between the documents A and B is entered by using the third document C as a reference document. In response to this command, the system controller 14 calculates new coordinate points of the documents A and B so as to increase the distance Lab between the documents A and B, but without increasing the distances between the documents A and C and between the documents B and C. The layout coordinate table is corrected upon movement of the documents A and B in accordance with updated coordinate data. The registration positions of the documents A and B on the display screen are updated as documents A' and B' so that the distance between the documents A and B becomes a distance Lab' as illustrated in the model of Fig. 8B. Coordinate conversion caused by document registration position updating can be readily understood by those skilled in the art by normal mathematical calculations.

When a local registered area 50 (Fig. 9A) including the document information registered in the document filing structure is moved, the operator uses the area designation key 22g in the keyboard 22 shown in Fig. 3. For example, the destination center of the local registered area 50 having a start point 52 and an end point 54 shown in Fig. 9A is designated as a point 56, and the registered area 50 is immediately translated to a new area 58 under the control of the system controller 14, as shown in Fig. 9B. In this case, coordinate conversion between the start point 52 and the end point 54 of the old area 50, and a start point 60 and an end point 62 of the new area 58 is performed substantially in the same manner as in the previous calculation technique.

The electronic document filing apparatus in this embodiment can perform other operations such as retrieval of a desired document, deletion of a certain document, and replacement among documents, in addition to the operation modes described above. In a retrieval mode for a desired document, the operator designates the registration position of the document subject to retrieval by using the position designator 24 mounted on the display screen of the layout display terminal 20. The coordinate data representing the designated display position is searched from the layout management table, and the document having the searched coordinate data is retrieved. When a plurality of documents having in common the searched coordinate data are registered at the same position on the display screen, the latest document content is displayed at the first display terminal 12. Therefore, when the operator wishes to visually observe a separate document image, this document image can be freely observed upon operation of the previous page key 22ℓ or the next page key 22k in the keyboard 22. In the document deletion mode, a desired document is retrieved in the manner described above, and the deletion key 22d is operated to delete this document from the memory unit 16. In this case, the system controller 14 confirms the spatial registration position of the deleted document, searches the corresponding identification code from the layout management table, and searches for the address in the memory bank in the memory unit 16. In this sequence, the document is deleted under the control of the system controller 14. In the document replacement mode, the identification code of a document for replacement is designated by the position designator 24 and replaced with that of a new document.

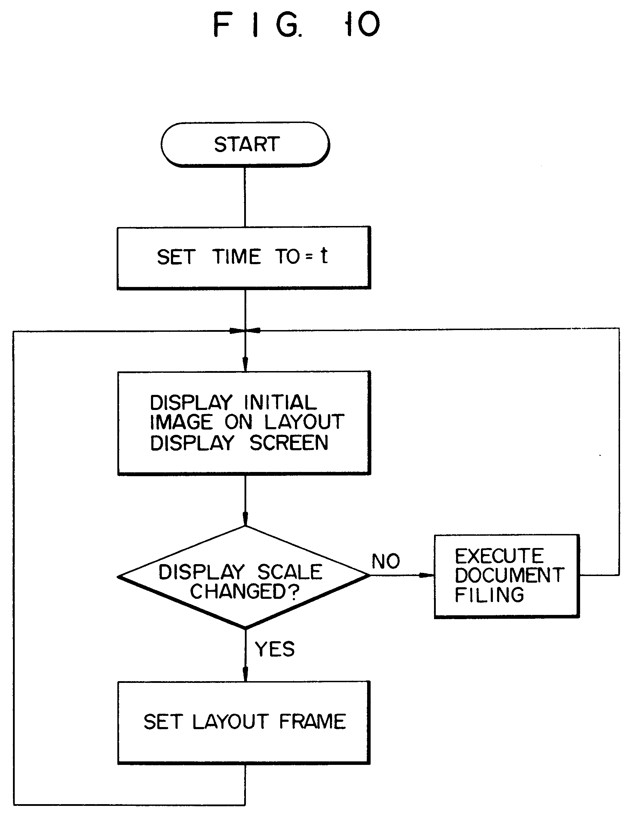

The control operation of the system controller 14 in the electronic document filing apparatus will be described with reference to Figs. 10 to 12. The flow chart shown in Fig. 10 represents a basic mode of control operation. When the apparatus is rendered operative, the system controller 14 sets current time t to initial time T0 = t as document management time. The document information registered in the apparatus prior to the management time T0 is read out in accordance with the management table. The document filing structure of all readout documents is displayed as an initial display at the layout display terminal 20, as shown in Fig. 2. Therefore, the operator can know the filing structure of the previously registered document information with reference to the initial display.

In this state, the mode for enlarging/reducing the document registration space V displayed at the display terminal 20 to adjust the display area of the display screen, or the initial document filing mode is selected by operation of the keyboard 22. According to the flow chart in Fig. 10, the two operation modes are selectively set by the system controller 14.

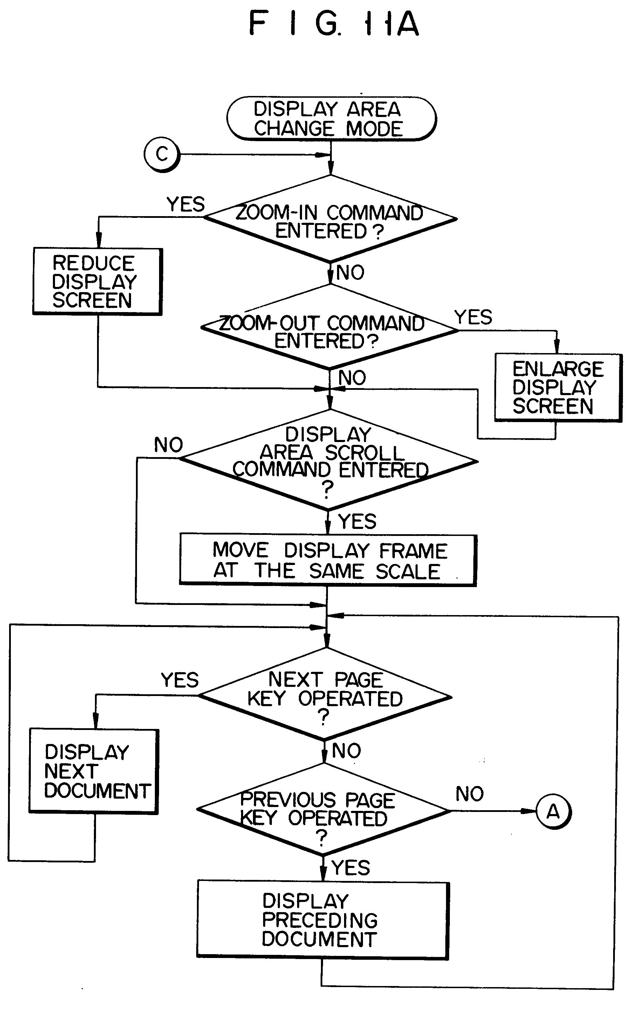

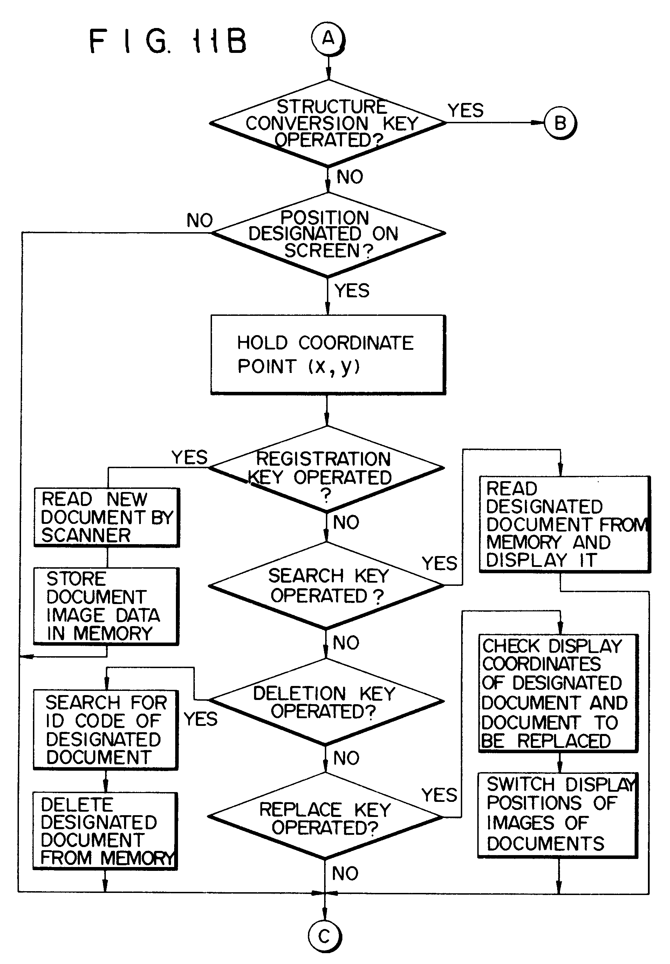

Referring to Fig. 11A, the control operation of the system controller 14 will be described in detail when the display area of the document filing structure changes at the layout display terminal 20. The operation state of the zoom-in key 22i and the zoom-out key 22j in the keyboard 22 is checked in the initial display mode. When the zoom-in key 22i is used by the operator to designate the zoom-in operation of the display screen, the system controller 14 continuously zooms in the initial display screen at the layout display terminal at a desired increased scale. However, when the zoom-out key 22j is operated to enter a zoom-out command for the display screen, the system controller 14 zooms out the initial display screen at the layout display terminal at a desired reduced scale.

Furthermore, when a local space of the document filing structure which is currently displayed at the display terminal 20 is scrolled at the current scale, the operator uses the scroll direction key 22a to designate a destination coordinate point. In response to this key input, the system controller 14 causes the calculation unit of Fig. 7 to perform coordinate conversion calculation which will be described with reference to Figs. 9A and 9B. The display frame D of the screen is translated by a designated distance in accordance with the new coordinate data obtained by the calculation unit.

A desired document or documents including the desired document appear on the layout display screen. When only the desired document is displayed on the display screen, the operator need not use the previous page key 22ℓ or the next page key 22k. However, when the desired document is included in the documents and does not currently appear on the screen, the operator uses the previous page key 22ℓ or the next page key 22k to sequentially observe the documents so as to search the desired document. For example, when the next page key 22k is used, the system controller 14 sequentially reads out the document image data from the memory unit 16 in an order of the latest registered documents and causes the document display terminal 12 to display the documents in the order named.

Fig. 11B is a flow chart concerning the document filing mode. In this embodiment, the document filing mode is classified into two systems in accordance with the operation state of the structure conversion key 22f. When the structure conversion key 22f is not operated, the controller checks whether or not position designation for the layout display screen is entered in accordance with an output signal from the position designator 24, as shown in Fig. 11B. When a specific position of the display screen is designated (e.g., to select a certain document, or to designate a prospective registration position) from the document filing structure appearing on the display screen at the layout display terminal 20, the system controller 14 identifies coordinate data (x, y) of the designated position in accordance with the output signal from the position designator 24. The system controller 14 then checks whether or not any one of the document file designation keys such as the registration key 22b, the search key 22c, the deletion key 22d and the replace key 22e is operated. Registration, search, deletion or replacement is performed in the manner as previously described in accordance with the operated key under the control of the system controller 14.

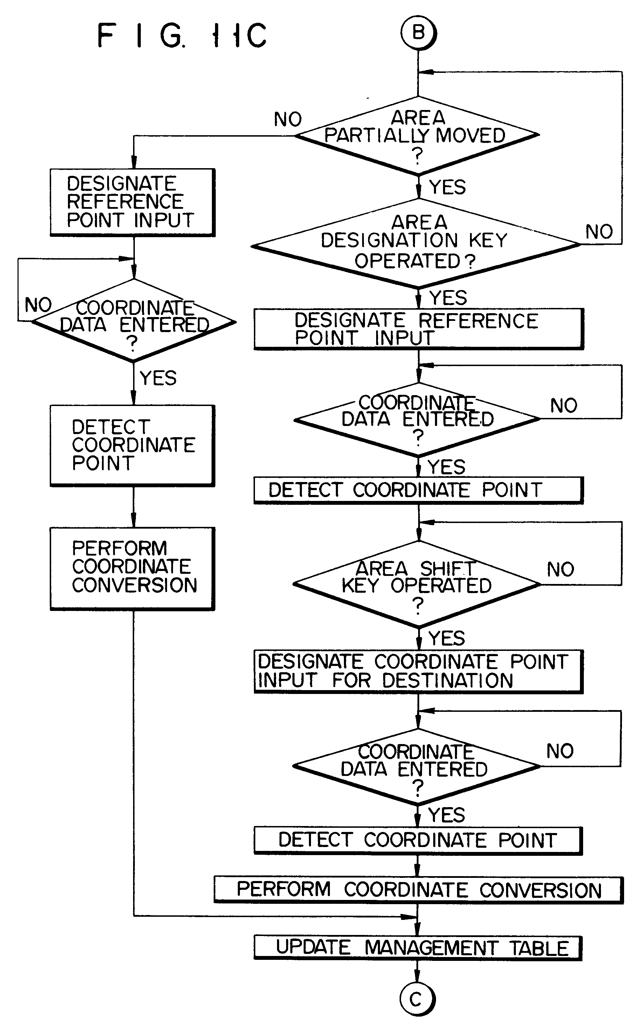

However, when the structure conversion key 22f in the keyboard 22 is operated in the document filing mode, the document filing structure updating, described with reference to Figs. 8 and 9, is executed. The flow of the document filing structure updating in this case is summarized in the flow chart of Fig. 11C.

By using the electronic document filing system according to this embodiment of the present invention, the operator can effectively perform document filing at high speed. In addition, the operator can build up correlation between the contents of the documents by using the document filing space V displayed at the layout display terminal 20. In the document filing space V displayed at the layout display terminal 20, the relationship between the contents of the plurality of documents can be directly represented by the relative positional relationships between the documents. In document indexing/filing, therefore, even if the operator cannot independently define the classification of a new document, the new document can be easily located in the registration space V. For example, when the content of the new document is associated with that of a plurality of registered documents, and the content of the new document cannot be independently determined, the new document is spaced a predetermined distance from the plurality of documents on the display screen serving as a filing space. Therefore, the new document can be properly expressed on the screen at the layout display terminal 20. This leads to an effect wherein the operator can judge the nature and value of the document to be registered in accordance with a discretionary judgement. The registration position of the registered document in the document filing space V can be freely updated in accordance with the key operation. Therefore, demands on the operator in document filing can be minimized.

As has been described in detail, various kinds of documents are displayed on the layout display terminal 20, so that the operator can build up a unique document indexing/filing architecture, i.e., the document filing structure. In this manner, the document filing structure has maximum flexibility. After the documents are registered, the operator can microscopically consider the document filing system displayed on the screen. It is reasonable to know that the operator will discover a correlation between the documents quite unexpected at the time of document registration. This expectation is a unique attribute of the present invention and unlike a conventional filing technique wherein documents are ranked in large, intermediate and small class categories. When the electronic document filing system according to the present invention is effectively utilized, document filing free from conventional filing technique drawbacks can be performed at high speed. For example, various kinds of documents can be filed for a given topic in accordance with the filing technique of the present invention, and a new and unique correlation not previously thought of can be developed with reference to the document filing structure displayed on the layout display screen. This new correlation will inevitably contribute to a truer understanding of problems, and hence to achievement of creative solutions.

In the above embodiments, the document filing space at the layout display terminal 20 is set as a two-dimensional space. However, the document filing space is not limited to such a space. For example, the layout space can be a three-dimensional space displayed on a three-dimensional graphic display, thereby achieving document management of a higher order. A classification name can be added to a given area within the layout space so as to perform an assignment type document management, and additionally, key words can be added to documents to be registered. As another modification, a plurality of layout tables can be prepared to layout identical document information in different layout positions.

Furthermore, document information is not limited to information read by a scanner, but can be extended to character information from a wordprocessor and to pictorial information.

## Claims

1. An electronic document filing apparatus for helping an operator to changeably classify document information in an internal filing space, comprising data input means (10) for optically scanning an input paper document (Q in Fig. 4B) to produce corresponding electrical document image data, memory means (16) for storing the image data together with those of already-filed documents, and display means (12) having a display screen for displaying the document images on the screen, characterised in that said apparatus further comprises:

   controller means (14) connected to said memory means (16) and said display means (12,20), for (1) causing said display means to display partially or entirely a document-filing structure in the filing space, and (2) for controlling the filing of an input document into said filing space of said apparatus, by causing said display means to display the document images on the display screen in such a manner that, when the input document is determined by the operator to be relevant or pertinent to a plurality of certain already-filed documents (A,B,C), the image of the input document (Q) is allowed to be located at an intermediate position (30) which defines a specific distance between the input document and each of said certain already-filed documents, to thereby create a radially-expandable filing structure being displayed on said display screen, said specific distance being variable and having an analog value representing the degree of relevance determined by the operator at filing of the input document, and causing the memory means (16) to store the said position (30) of the image in the filing space in association with the said image data of the input paper document (Q).

2. The apparatus according to claim 1, characterised in that said display means comprises a first display device (20) for displaying the stored images of a plurality of sequentially registered documents so that the display distance therebetween changes in accordance with the correlation between the contents thereof, thereby building up a document filing structure of a dot pattern.

3. The apparatus according to claim 2, characterised in that said display means further comprises a second display device (12) for displaying one document image (Q).

4. The apparatus according to claim 2, characterised in that said controller means (14) continuously changes the display scale of the document filing structure displayed on said first display device (20).

5. The apparatus according to claim 4, characterised in that said controller means (14) scrolls a display area while the display scale of the document filing structure displayed on said first display device (20) is kept unchanged.

6. The apparatus according to claim 5, characterised in that said controller means (14) includes electrical circuitry (40,42,44,46,48,50,52) for performing coordinate conversion when the display screen changes on said first display device (20).

7. A document filing method for helping an operator to changeably classify document information in an internal filing space, comprising the steps of optically scanning new paper documents (Q) to be registered and producing corresponding document image data, displaying the document image data on a special document display device (12), and electrically storing the document image data in a predetermined memory device (16), characterised in that the display device (20) is caused to display partially or entirely a document-filing structure in the said filing space, and to display the document images on the display screen in such a manner that, when the input document is determined by the operator to be relevant or pertinent to a plurality of certain already-filed documents (A,B,C), the image of the input document (Q) is allowed to be located at an intermediate position (30) which defines a specific distance between the input document and each of said certain already-filed documents, to thereby create a radially-expandable filing structure being displayed on said display screen, said specific distance being variable and having an analog value representing the degree of relevance determined by the operator at filing of the input document, and causing the memory means (16) to store the said position (30) of the image in the filing space in association with the said image data of the input paper document (Q).

8. The method according to claim 7, characterised in that the images of a plurality of sequentially registered document information are displayed on said display device (20) so that a relative display distance therebetween changes in accordance with the correlation between the contents thereof, thereby building up a document filing structure of a dot pattern.

9. The method according to claim 8, characterised in that a display scale of the document filing structure displayed on said display device (20) is continuously changed.

10. The method according to claim 8, characterised in that a display area is scrolled while the display scale of the document filing structure displayed on said display device (20) is kept unchanged.

**Patentansprüche**

1. Elektronische Dokumentablagevorrichtung, um es einer Bedienungsperson bzw. einem Operator zu erleichtern, Dokumentinformation in einem internen Ablage- oder Dateiraum änderbar zu klassifizieren, umfassend eine Dateneingabeeinheit (10) zum optischen Abtasten eines Eingabe-Papierdokuments (Q in Fig. 4B) zwecks Erzeugung entsprechender elektrischer Dokumentbilddaten, eine Speichereinheit (16) zum Abspeichern der Bilddaten zusammen mit denen bereits abgelegter Dokumente und eine Anzeigeeinheit (12) mit einem Bildschirm zum Anzeigen der Dokumentbilder auf dem Bildschirm,
dadurch gekennzeichnet, daß die Vorrichtung ferner umfaßt:
eine mit der Speichereinheit (16) und der Anzeigeeinheit (12, 20) verbundene Steuereinheit (14), um 1. die Anzeigeeinheit eine Dokumentablage- oder -dateistruktur im Dateiraum teilweise oder vollständig anzeigen zu lassen, und 2. zum Steuern des Ablegens eines Eingabedokuments im Dateiraum der Vorrichtung, indem die Anzeigeeinheit veranlaßt wird, die Dokumentbilder auf dem Bildschirm in der Weise anzuzeigen, daß dann, wenn das Eingabedokument vom Operator als für eine Anzahl bestimmter, bereits abgelegter Dokumente (A, B, C) relevant oder zutreffend bestimmt wird, das Bild des Eingabedokuments (Q) in einer mittleren Position (30) angeordnet werden kann, welche einen spezifischen Abstand zwischen dem Eingabedokument und jedem der bestimmten, bereits abgelegten Dokumente festlegt, um damit eine radial ausdehnbare oder erweiterbare, auf dem Bildschirm angezeigte Ablage- oder Dateistruktur zu erzeugen, wobei der spezifische Abstand variabel ist und eine analoge Größe aufweist, welche den durch den Operator beim Ablegen des Eingabedokuments bestimmten Relevanzgrad repräsentiert, und um die Speichereinheit (16) zu veranlassen, die Position (30) des Bilds im Dateiraum in Zuordnung zu den Bilddaten des EingabePapierdokuments (Q) zu speichern.

2. Vorrichtung nach Anspruch 1, dadurch gekennzeichnet, daß die Anzeigeeinheit eine erste Anzeigevorrichtung (20) zum Anzeigen der gespeicherten Bilder einer Anzahl von sequentiell registrierten Dokumenten in der Weise aufweist, daß der Anzeigeabstand dazwischen sich entsprechend der Korrelation zwischen den Inhalten derselben ändert, um damit eine Dokumentdateistruktur eines Punktmusters aufzubauen.

3. Vorrichtung nach Anspruch 2, dadurch gekennzeichnet, daß die Anzeigeeinheit ferner eine zweite Anzeigevorrichtung (12) zum Anzeigen eines Dokumentbilds (Q) aufweist.

4. Vorrichtung nach Anspruch 2, dadurch gekennzeichnet, daß die Steuereinheit (14) den Anzeigemaßstab der auf der ersten Anzeigevorrichtung (20) angezeigten Dokumentablagestruktur kontinuierlich ändert.

5. Vorrichtung nach Anspruch 4, dadurch gekennzeichnet, daß die Steuereinheit (14) einen Anzeigebereich (vertikal/horizontal) durchlaufen laßt, während der Anzeigemaßstab der auf der ersten Anzeigevorrichtung (20) angezeigten Dokumentablagestruktur unverändert bleibt.

6. Vorrichtung nach Anspruch 5, dadurch gekennzeichnet, daß die Steuereinheit (14) eine elektrische Schaltung (40, 42, 44, 46, 48, 50, 52) zur Durchführung einer Koordinatenumwandlung, wenn sich der Bildschirm auf der ersten Anzeigevorrichtung (20) ändert oder wechselt, aufweist.

7. Dokumentablageverfahren, um es einer Bedienungsperson bzw. einem Operator zu erleichtern, Dokumentinformation in einem internen Ablage- oder Dateiraum änderbar zu klassifizieren, umfassend die folgenden Schritte: optisches Abtasten neuer, zu registrierender Papierdokumente (Q) und Erzeugen von entsprechenden Dokumentbilddaten; Anzeigen der Dokumentbilddaten auf einer speziellen Dokumentanzeigevorrichtung (12); und elektrisches Abspeichern der Dokumentbilddaten in einer vorbestimmten Speichervorrichtung (16), dadurch gekennzeichnet, daß die Anzeigevorrichtung (20) veranlaßt wird, eine Dokumentablage- oder -dateistruktur im Dateiraum teilweise oder vollständig anzuzeigen und die Dokumentbilder auf dem Bildschirm in der Weise anzuzeigen, daß dann, wenn das Eingabedokument vom Operator als für eine Anzahl bestimmter, bereits abgelegter Dokumente (A, B, C) relevant oder zutreffend bestimmt wird, das Bild des Eingabedokuments (Q) in einer mittleren Position (30) angeordnet werden kann, welche einen spezifischen Abstand zwischen dem Eingabedokument und jedem der bestimmten, bereits abgelegten Dokumente festlegt, um damit eine radial ausdehnbare oder erweiterbare, auf dem Bildschirm angezeigte Ablage- oder Dateistruktur zu erzeugen, wobei der spezifische Abstand variabel ist und eine analoge Größe aufweist, welche den durch den Operator beim Ablegen des Eingabedokuments bestimmten Relevanzgrad repräsentiert, und die Speichereinheit (16) veranlaßt wird, die Position (30) des Bilds im Dateiraum in Zuordnung zu den Bilddaten des Eingabe-Papierdokuments (Q) zu speichern.

8. Verfahren nach Anspruch 7, dadurch gekennzeichnet, daß die Bilder einer Anzahl von sequentiell registrierten Dokumentinformationen auf der Anzeigevorrichtung (20) so angezeigt werden, daß sich ein relativer Anzeigeabstand dazwischen entsprechend der Korrelation zwischen den Inhalten derselben ändert, um damit eine Dokumentablagestruktur eines Punktmusters aufzubauen.

9. Verfahren nach Anspruch 8, dadurch gekennzeichnet, daß der Anzeigemaßstab der auf der Anzeigevorrichtung (20) angezeigten Dokumentablagestruktur kontinuierlich geändert wird.

10. Verfahren nach Anspruch 8, dadurch gekennzeichnet, daß der Anzeigebereich (vertikal/horizontal) durchlaufen gelassen wird, während der Anzeigemaßstab der auf der Anzeigevorrichtung (20) angezeigten Dokumentablagestruktur unverändert bleibt.

**Revendications**

1. Appareil d'archivage de document électronique pour aider un opérateur à classer de façon modifiable l'information de document dans un espace d'archivage interne, comprenant un moyen d'entrée de données (10) pour balayer optiquement un document papier d'entrée (Q sur la figure 4B) afin de produire des données d'image de document électrique correspondantes, un moyen de mémoire (16) pour stocker les données d'image avec celles de documents déjà archivés et un moyen d'affichage (12) comportant un écran d'affichage pour afficher les images de document sur l'écran, caractérisé en ce que ledit appareil comprend en outre :

un moyen de contrôleur (14) connecté audit moyen de mémoire (16) et audit moyen d'affichage (12, 20) pour (1) forcer ledit moyen d'affichage à afficher partiellement ou en totalité une structure d'archivage de document dans l'espace d'archivage et (2) pour contrôler l'archivage d'un document d'entrée dans ledit espace d'archivage dudit appareil en forçant ledit moyen d'affichage à afficher les images de document sur l'écran d'affichage d'une manière telle que lorsque le document d'entrée est déterminé par l'opérateur comme ayant rapport à ou se rapportant à une pluralité de certains documents déjà archivés (A, B, C), l'image du document d'entrée (Q) soit autorisée à être positionnée en une position intermédiaire (30) qui définit une distance spécifique entre le document d'entrée et chacun desdits certains documents déjà archivés pour ainsi créer une structure d'archivage pouvant s'étendre radialement qui est affichée sur ledit écran d'affichage, ladite distance spécifique étant variable et présentant une valeur analogique représentant le degré de pertinence déterminé par l'opérateur lors de l'archivage du document d'entrée, et en forçant le moyen de mémoire (16) à stocker ladite position (30) de l'image dans l'espace d'archivage en association avec lesdites données d'image du document papier d'entrée (Q).

2. Appareil selon la revendication 1, caractérisé en ce que ledit moyen d'affichage comprend un premier dispositif d'affichage (20) pour afficher les images stockées d'une pluralité de documents enregistrés séquentiellement de telle sorte que la distance d'affichage entre eux varie en relation avec la corrélation entre leurs contenus pour ainsi élaborer une structure d'archivage de document constituée par une configuration en points.

3. Appareil selon la revendication 2, caractérisé en ce que ledit moyen d'affichage comprend en outre un second dispositif d'affichage destiné à afficher une image de document (Q).

4. Appareil selon la revendication 2, caractérisé en ce que ledit moyen de contrôleur (14) modifie en continu l'échelle d'affichage de la structure d'archivage de document affichée sur ledit premier dispositif d'affichage (20).

5. Appareil selon la revendication 4, caractérisé en ce que ledit moyen de contrôleur (14) fait défiler une zone d'affichage tandis que l'échelle d'affichage de la structure d'archivage de document affichée sur ledit premier dispositif d'affichage (20) est maintenue inchangée.

6. Appareil selon la revendication 5, caractérisé en ce que ledit moyen de contrôleur (14) inclut un circuit électrique (40, 42, 44, 46, 48, 50, 52) pour réaliser une conversion de coordonnées lorsque l'écran d'affichage est commuté sur ledit premier dispositif d'affichage (20).

7. Procédé d'archivage de document pour aider un opérateur à classer de façon modifiable l'information de document dans un espace d'archivage interne, comprenant les étapes de balayage optique de nouveaux documents papier (Q) qui doivent être enregistrés et de production de données d'image de document correspondantes, d'affichage des données d'image de document sur un dispositif d'affichage de document spécial (12) et de stockage de façon électrique des données d'image de document dans un dispositif de mémoire prédéterminé (16), caractérisé en ce que le dispositif d'affichage (20) est forcé à afficher partiellement ou en totalité une structure d'archivage de document dans ledit espace d'archivage et à afficher les images de document sur l'écran d'affichage d'une manière telle que lorsque le document d'entrée est déterminé par l'opérateur comme ayant rapport à ou se rapportant à une pluralité de certains documents déjà archivés (A, B, C), l'image du document d'entrée (Q) soit autorisée à être positionnée en une position intermédiaire (30) qui définit une distance spécifique entre le document d'entrée et chacun desdits certains documents déjà archivés pour ainsi créer une structure d'archivage pouvant s'étendre radialement qui est affichée sur ledit écran d'affichage, ladite distance spécifique étant variable et présentant une valeur analogique représentant le degré de pertinence déterminé par l'opérateur lors de l'archivage du document d'entrée, et en forçant le moyen de mémoire (16) à stocker ladite position (30) de l'image dans l'espace d'archivage en association avec lesdites données d'image du document papier d'entrée (Q).

8. Procédé selon la revendication 7, caractérisé en ce que les images d'une pluralité d'informations de document enregistrés séquentiellement sont affichées sur ledit dispositif d'affichage (20) de telle sorte qu'une distance d'affichage relative entre eux varie en relation avec la corrélation entre leurs contenus d'où l'élaboration d'une structure d'archivage de document constituée par une configuration en points.

9. Procédé selon la revendication 8, caractérisé en ce qu'une échelle d'affichage de la structure d'archivage de document affichée sur ledit dispositif d'affichage (20) est modifiée en continu.

10. Procédé selon la revendication 8, caractérisé en ce qu'une zone d'affichage est défilée tandis que l'échelle d'affichage de la structure d'archivage de document affichée sur ledit dispositif d'affichage (20) est maintenue inchangée.

# F I G. 1

```
SYSTEM          MEMORY
CONTROLLER      UNIT

14              16                      12          20


DOCUMENT        PRINTER     KEYBOARD    POSITION
SCANNER                     UNIT        DESIGNATOR

10          18      26      22          24
```

EP 0 157 539 B1

# F I G. 2

# F I G. 3

# F I G. 4A

# F I G. 4B

# F I G. 5

# F I G. 6

# F I G. 7

# F I G. 8A

# F I G. 8B

# F I G. 9A

# F I G. 9B

# F I G. 10

```
                    ┌──────────────┐
                    │    START     │
                    └──────┬───────┘
                           │
            ┌──────────────┴──────────────┐
            │      SET  TIME  TO = t       │
            └──────────────┬──────────────┘
                           │
      ┌────────────────────┼─────────────────────────────┐
      │                    │                              │
      │     ┌──────────────┴──────────────┐               │
      │     │  DISPLAY  INITIAL           │               │
      │     │  IMAGE ON LAYOUT            │               │
      │     │  DISPLAY  SCREEN            │               │
      │     └──────────────┬──────────────┘               │
      │                    │                              │
      │              ◇─────┴─────◇      NO   ┌──────────────┐
      │             ◇  DISPLAY SCALE  ◇──────│  EXECUTE     │
      │             ◇  CHANGED?       ◇      │  DOCUMENT    │
      │              ◇───────────◇          │  FILING      │
      │                    │                 └──────────────┘
      │                   YES
      │                    │
      │     ┌──────────────┴──────────────┐
      │     │     SET LAYOUT FRAME         │
      │     └──────────────┬──────────────┘
      │                    │
      └────────────────────┘
```

# F I G. 11A

DISPLAY AREA
CHANGE MODE

C

ZOOM-IN COMMAND
ENTERED ?

YES → REDUCE
DISPLAY
SCREEN

NO

ZOOM-OUT COMMAND
ENTERED?

YES → ENLARGE
DISPLAY
SCREEN

NO

DISPLAY
AREA SCROLL
COMMAND ENTERED
?

NO

YES

MOVE DISPLAY FRAME
AT THE SAME SCALE

NEXT PAGE
KEY OPERATED
?

YES → DISPLAY
NEXT
DOCUMENT

NO

PREVIOUS PAGE
KEY OPERATED
?

NO → A

YES

DISPLAY
PRECEDING
DOCUMENT

# F I G. 11B

A

STRUCTURE
CONVERSION KEY
OPERATED? — YES → B

NO

NO ← POSITION
DESIGNATED ON
SCREEN?

YES

HOLD COORDINATE
POINT (x, y)

YES ← REGISTRATION
KEY OPERATED
?

READ NEW
DOCUMENT BY
SCANNER

STORE
DOCUMENT
IMAGE DATA
IN MEMORY

NO

SEARCH KEY
OPERATED ? — YES →

READ
DESIGNATED
DOCUMENT FROM
MEMORY AND
DISPLAY IT

NO

SEARCH FOR
ID CODE OF
DESIGNATED
DOCUMENT

YES ← DELETION KEY
OPERATED?

CHECK DISPLAY
COORDINATES
OF DESIGNATED
DOCUMENT AND
DOCUMENT TO
BE REPLACED

NO

DELETE
DESIGNATED
DOCUMENT
FROM MEMORY

REPLACE KEY
OPERATED? — YES →

SWITCH DISPLAY
POSITIONS OF
IMAGES OF
DOCUMENTS

NO

C

20

# F I G. 11C